# EUROPÄISCHE PATENTSCHRIFT

(11) **EP 3 210 857 B1**
(45) Veröffentlichungstag und Bekanntmachung des Hinweises auf die Patenterteilung: **21.11.2018**
(21) Anmeldenummer: 16205384.7
(22) Anmeldetag: 20.12.2016
(51) Int. Cl.: B62D 13/02, B62D 53/08

(54) **KÖNIGSZAPFENVORRICHTUNG FÜR EIN AUFLIEGERLENKSYSTEM**
KINGPIN DEVICE FOR A TRAILER STEERING SYSTEM
DISPOSITIF À PIVOT POUR SYSTÈME DE GUIDAGE DE SEMI-REMORQUE

(30) Priorität: 29.02.2016 DE 102016203224
(43) Veröffentlichungstag der Anmeldung: 30.08.2017
(73) Patentinhaber: Transport Industry Development Centre B.V., 5692 GA Son (NL)
(72) Erfinder: KNOOK, Ruud, 5613 KN Eindhoven (NL); MARTENS, Hugo, 5591 EW Heeze (NL)
(74) Vertreter: Mehler Achler

(56) Entgegenhaltungen:
- EP-A1- 1 444 125
- EP-A1- 2 899 101
- US-A- 5 536 030
- US-A1- 2002 125 682
- US-A1- 2013 082 453

## Beschreibung

Die Erfindung betrifft eine Königszapfenvorrichtung für ein Aufliegerlenksystem gemäß der im Oberbegriff des Anspruchs 1 stehenden Merkmale.

Das Aufliegerlenksystem ist üblicherweise an einem Auflieger eines Sattelzuges angeordnet. Der Auflieger wird mit seinem Königszapfen vor Fahrtantritt mechanisch in eine Sattelkupplung eines Zugfahrzeuges eingefahren und dann drehbar darin verriegelt, so dass der Auflieger bei Kurvenfahrten des Sattelzuges um den Königszapfen schwenken kann. Problematisch ist dabei der große Schwenkradius des Sattelzuges, da die Achsen des Aufliegers in der Fahrzeuglängsachse beabstandet zu dem Königszapfen angeordnet sind und bei Kurvenfahrten nicht der Spur des Zugfahrzeuges folgen. Aus diesem Grund gibt es bereits Bestrebungen, den Schwenkradius des Sattelzuges durch den Einbau eines Aufliegerlenksystems zu verringern, welches ein Mitlenken der Achsen des Aufliegers ermöglicht.

Die EP 0 911 246 A2 offenbart beispielsweise ein derartiges Aufliegerlenksystem, bei dem ein Sensor den Relativwinkel zwischen Zugfahrzeug und Auflieger erfasst und die Aufliegerachse in Abhängigkeit des Sensorsignals elektrohydraulisch und elektropneumatisch gelenkt ist. Der Relativwinkel wird mittels eines drehbar von außen an dem Königszapfen gelagerten Ringes und eines ortsfest an einem Montageteller befestigten Sensors ermittelt, welcher einen magnetisierten oder kodierten Abschnitt des drehbaren Ringes erfasst. Der drehbare Ring stützt sich bei in die Sattelkupplung eingefahrenem Königszapfen mittels einer radial vorstehenden Positionierungszunge an einer Einfahröffnung der Sattelkupplung ab und schwenkt daher bei Kurvenfahrten an dem Sensor vorbei. Als nachteilig hat sich jedoch die exponierte Lage des drehbaren Ringes und des Sensors herausgestellt, die insbesondere beim An- und Abkuppeln zu Beschädigungen des drehbaren Ringes sowie des Sensors geführt hat. Die EP 0 678 440 B1 schlägt daher eine drehbar innerhalb des Königszapfens gelagerte Welle vor, welche an einem unteren Ende des Königszapfens heraustritt und mit einem radial zu der Welle ausgerichteten Verbindungsstab verbunden ist. Der Verbindungsstab weist an seinem königszapfenfernen Ende eine Schwenkfahne auf, die sich bei einem in die Sattelkupplung eingekuppeltem Königszapfen an dessen Einfahröffnung abstützt. Ein Sensor oder Messwertgeber ist von oben in den Montageteller eingesetzt und erfasst von oben die Schwenkbewegung der Welle innerhalb des Königszapfens.

In der US 2013/0082453 A1 ist eine Vorrichtung offenbart, welche ein Messen des Relativwinkels zwischen Zugfahrzeug und Auflieger während einer Kurvenfahrt ermöglicht. Hierfür ist am unteren Ende des Königszapfens eine Zunge in Form einer Schwenkfahne montiert, die sich in lateraler Richtung an Seitenwänden der Einfahröffnung einer Sattelkupplung abstützt. Die Zunge kann auch mit einer axial durch den Königszapfen verlaufenden Welle verbunden sein, die mit ihrem oberen Abschnitt aus dem Königszapfen heraustritt und deren Drehbewegung während des Durchfahrens einer Kurve von einem Sensor erfasst wird US 5 536 030 A offenbart eine Königszapfenvorrichtung gemäß dem Oberbegriff des Anspruchs 1.

In der Praxis kommt es jedoch immer wieder zu Beschädigungen der Schwenkfahne, da diese mitunter unmittelbar vor dem Ankuppeln des Aufliegers zum Beispiel in Richtung des Zugfahrzeugs zeigt und infolgedessen von der sich annähernden Sattelkupplung zerstört wird. Insbesondere wenn dieses unbemerkt geschieht und die Schwenkfahne bricht, kann sich die Welle undefiniert innerhalb des Königszapfens drehen, was von dem Sensor erfasst und als entsprechendes Steuersignal den Achsen des Aufliegers bereitgestellt wird. Der Auflieger kann dadurch unkontrolliert seitlich ausscheren und katastrophale Unfälle verursachen.

Folglich lag der Erfindung die Aufgabe zugrunde, eine Königszapfenvorrichtung bereitzustellen, welche einerseits das Risiko einer Fehlstellung und einer dadurch verursachten Beschädigung der Schwenkfahne deutlich verringert und andererseits die Betriebssicherheit der Königszapfenvorrichtung erhöht.

Die Aufgabe wird erfindungsgemäß mit den kennzeichnenden Merkmalen des Anspruchs 1 gelöst. In montiertem Zustand der Königszapfenvorrichtung ist dessen Königszapfen in einem Schlossbereich der Sattelkupplung verriegelt und die Schwenkfahne befindet sich in einer V-förmigen Einfahröffnung der Sattelkupplung. In dieser Position stößt die Schwenkfahne seitlich gegen die Wandungen der Einfahröffnung und stützt sich an diesen spielfrei ab. Die spielfreie Positionierung innerhalb der Einfahröffnung ist wünschenswert, um möglichst jede Veränderung der Relativbewegung zwischen Zugfahrzeug und Auflieger erfassen und über die Welle auf den Auflieger übertragen zu können. Das mindestens eine Federelement ermöglicht beim Durchfahren einer Kurve aufgrund seiner Elastizität eine Relativbewegung der Schwenkfahne zusammen mit einer Sattelkupplung des Zugfahrzeuges gegenüber dem ortsfest am Auflieger befestigten Königszapfen. Sobald der Auflieger abgekuppelt wird und die Schwenkfahne in Umfangsrichtung um den Königszapfen frei drehen kann, sorgt das mindestens eine Federelement für eine Ausrichtung der Schwenkfahne in eine Mittellage im Bereich der Fahrzeuglängsachse, heckseitig zu dem Königszapfen. Bei Annäherung eines Zugfahrzeuges besteht dadurch keine Gefahr mehr, dass das sich annähernde Zugfahrzeug mit seinem Chassis, daran angebrachten Anbauteilen oder seiner Sattelkupplung die dann auf der abgewandten Seite des Königszapfens angeordnete Schwenkfahne zuerst trifft und dadurch zerstört.

Im Falle eines mechanischen Defektes der Schwenkfahne, insbesondere bei einem Abriss der Schwenkfahne von der Welle, wird die Betriebssicherheit der Königszapfenvorrichtung erheblich verbessert, da die Welle durch das mindestens eine Federelement in die vorgegebene Ausgangslage gedreht und dort gehalten wird. Die vorgegebene Ausgangslage entspricht der Geradeausposition der Achsen des Aufliegers. Es bleibt somit bei einem Bruch der Schwenkfahne lediglich das Mitlenken der Achsen des Aufliegers aus; diese verbleiben stetig in der Geradeausposition. Die Gefahr eines plötzlichen und unkontrollierten Einlenkens der Achsen des Aufliegers besteht nicht mehr.

Aufgrund der Anordnung des mindestens einen Federelementes an dem oberen Wellenende, befindet sich das mindestens eine Federelement in einem geschützten Bereich beispielsweise innerhalb des Aufliegerbodens, der weitgehend frei von einem Schmutz- und Wassereintrag ist. Hierdurch wird das Risiko einer verschleißbedingten Beschädigung der Königszapfenvorrichtung weiter gemindert.

Vorteilhafterweise ist das mindestens eine Federelement mit seinem zweiten Abschnitt gegenüber dem Königszapfen ortsfest abgestützt. Die feste Abstützung bildet ein Widerlager für die über die Welle in das Federelement eingeleiteten Kräfte.

Es hat sich als besonders günstig herausgestellt, wenn das obere Wellenende nach oben aus dem Königszapfen herausgeführt ist. Hieraus resultiert der Vorteil, dass innerhalb des Königszapfens kein freier Bauraum zur Aufnahme des mindestens einen Federelementes oder weiterer Komponenten der Königszapfenvorrichtung vorzusehen ist, welcher mit einer Materialschwächung des Königszapfens einhergehen würde.

Vorzugsweise ist das mindestens eine Federelement in einem an einer Oberseite des Königszapfens befestigten Federgehäuse angeordnet, in welches das obere Wellenende hineinragt. Hierdurch ist das Federelement in einem zum Königszapfen gesonderten Federgehäuse untergebracht und besonders effektiv gegen äußere Umwelteinflüsse geschützt. Darüber hinaus kann das Federelement bereits vor der Auslieferung eingelegt werden und als separate Baueinheit in weitgehend betriebsbereitem Zustand ausgeliefert werden. Auch kann im Schadensfall das Federgehäuse vom Königszapfen abgenommen und für Reparaturzwecke separat getauscht oder versandt werden.

Das Federgehäuse kann eine in radialer Richtung zu dem oberen Wellenende beabstandete Umfangswand aufweisen, so dass zwischen dem oberen Wellenende und der Umfangswand ein Ringraum ausgebildet ist. Der Ringraum ist vorzugsweise konzentrisch um das obere Wellende und/oder konzentrisch innerhalb der Umfangswand angeordnet. Der Ringraum nimmt günstigerweise das mindestens eine Federelement auf und kann daher eine zumindest teilweise komplementär zu dem mindestens einen Federelement ausgeformte Form und/oder Abmessungen aufweisen.

Zweckmäßigerweise ist das Federgehäuse mittels eines auf der dem Königszapfen abgewandten Seite angeordneten Deckels verschlossen. Der Deckel dient zunächst der Abdeckung des Federgehäuses in Richtung des Aufliegerbodens und verhindert insbesondere ein Herausspringen des mindestens einen Federelementes aus seiner vorgesehenen Position. Darüber hinaus kann in oder an dem Deckel oder an der Umfangswand ein Winkelsensor eingesetzt sein. Der Winkelsensor erfasst im Fahrbetrieb permanent die Stellung der Welle und damit die Stellung der Schwenkfahne relativ zum Königszapfen. Günstigerweise detektiert der Winkelsensor berührungslos einen am oberen Wellenende befestigten Magneten. Der Winkelsensor ist in diesem Fall vorzugsweise ein Hall-Sensor.

Gemäß einer besonders bevorzugten Ausführungsform weist das Federgehäuse eine Bodenwand mit einer Durchtrittsöffnung für das obere Wellenende auf. Die Durchtrittsöffnung ist vorzugsweise eine Bohrung, deren Innendurchmesser geringfügig größer als der Außendurchmesser des oberen Wellenendes ist.

Vorteilhafterweise ragen in den Ringraum ein ortsfest zum Federgehäuse angeordneter Haltestift und ein an dem oberen Wellenende ortsfest angeordneter Verdrängerstift. Der Haltestift und der Verdrängerstift wirken beide mit dem mindestens einen Federelement zusammen. Bei einer Drehung der Welle verändert sich der Abstand zwischen dem Haltestift und dem Verdrängerstift. Das mindestens eine Federelement kann insbesondere zwischen dem Haltestift und dem Verdrängerstift angeordnet sein.

Vorzugsweise ist der Haltestift an einer Innenseite der Umfangswand und/oder dem Deckel und/oder der Bodenwand des Federgehäuses befestigt. Der Haltestift ragt dann mit seinem freien Ende in den Ringraum hinein.

Zweckmäßigerweise sind der Haltestift und der Verdrängerstift in der vorgegebenen Ausgangslage der Schwenkfahne diametral gegenüberliegend in dem Ringraum angeordnet. Bei dieser Ausgangslage ist der Abstand zwischen dem Haltestift und dem Verdrängerstift auf beiden Seiten des Ringraumes gleich, so dass, wenn vorzugsweise das mindestens eine Federelement aus zwei Schraubenfedern gebildet ist, diese jeweils in den Ringraumabschnitt zwischen dem Haltestift und den Verdrängerstift eingelegt sein können. Die Schraubenfedern können dann vorzugsweise identisch ausgebildet sein, insbesondere hinsichtlich ihrer axialen Länge und ihrer Federkonstante.

Vorteilhafterweise sind die Schraubenfedern mit ihrer axialen Erstreckung in Umfangsrichtung des Ringraumes lose eingelegt. Bei einer Schwenkbewegung der Schwenkfahne kann eine der beiden Schraubenfedern in Druckrichtung beansprucht sein. Die andere Schraubenfeder ist in diesem Fall aufgrund einer Vergrößerung des Abstandes zwischen Haltestift und Verdrängerstift an keiner Kraftübertragung beteiligt.

Die axiale Länge der Schraubenfedern sollte bevorzugt dem Abstand zwischen dem Haltestift und dem Verdrängerstift innerhalb des Ringraumes bei diametral gegenüberstehendem Haltestift und Verdrängerstift entsprechen. Besonders bevorzugt ist eine Ausführungsform, bei welcher in der Ausgangslage der Schwenkfahne die Schraubenfedern jeweils mit dem ersten Abschnitt an dem Verdrängerstift und mit dem zweiten Abschnitt an dem Haltestift unter Vorspannung anliegen. Bei dieser Ausführungsform sind die Welle und somit auch die Schwenkfahne annähernd spielfrei zwischen den Schraubenfedern gehalten, so dass die Schwenkfahne vor dem Ankuppeln des Aufliegers stets in einer definierten Position ausgerichtet ist, auch wenn beispielsweise starker Wind oder andere äußere Kräfte auf die Schwenkfahne wirken.

Zum besseren Verständnis wird die Erfindung nachfolgend anhand von vier Figuren näher erläutert. Es zeigen die
- **Fig. 1:**: einen Querschnitt durch die Königszapfenvorrichtung;
- **Fig. 2:**: einen vergrößerten Querschnitt durch die Königszapfenvorrichtung im Bereich des Königszapfens;
- **Fig. 3:**: eine perspektivische Draufsicht auf Teile der Königszapfenvorrichtung bei geöffnetem Federgehäuse und
- **Fig. 4:**: eine perspektivische Draufsicht auf eine vollständige Königszapfenvorrichtung.

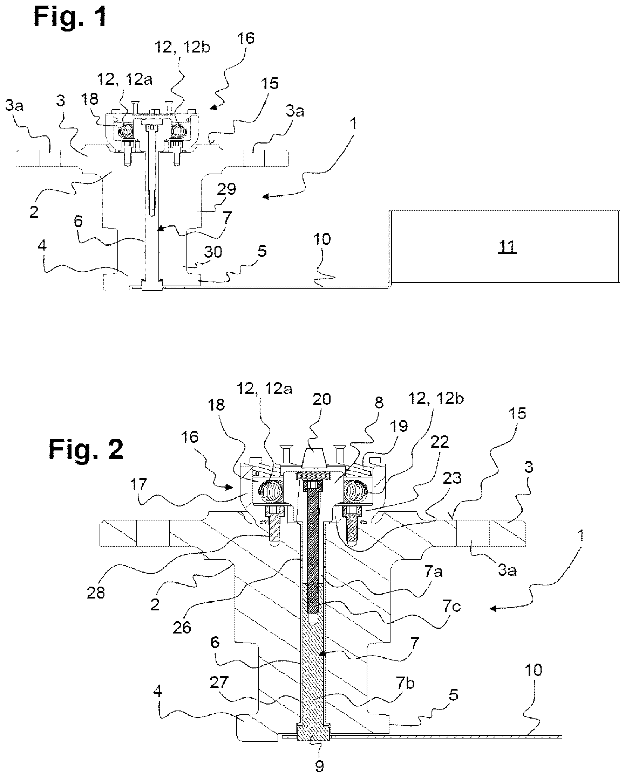

Die Fig. 1 zeigt eine erfindungsgemäße Königszapfenvorrichtung umfassend einen Königszapfen 1, welcher üblicherweise auf der Unterseite eines hier nicht dargestellten Aufliegers befestigt ist. Hierfür weist der Königszapfen 1 an seinem oberen Ende 2 einen Montageteller 3 mit mehreren darin eingebrachten, konzentrisch um seine Mittelachse angeordneten Befestigungsöffnungen 3a auf. Die Verbindung des Königszapfens 1 mit dem Auflieger erfolgt mittels durch die Befestigungsbohrungen 3a gesteckte Schrauben.

In Einbaulage nach unten geht der Montageteller 3 in einen durchmessergroßen Königszapfenabschnitt 29 und einen durchmesserkleinen Königszapfenabschnitt 30 über, an welchen eine ebenfalls nicht gezeigte Verschlussmechanik einer Sattelkupplung angreift. Dem durchmesserkleinen Königszapfenabschnitt 30 schließt sich am unteren Ende 4 des Königszapfens 1 ein Abschlussbund 5 an. Der Montageteller 3, der durchmessergroße Königszapfenabschnitt 29, der durchmesserkleine Königszapfenabschnitt 30 und der Abschlussbund 4 sind als einstückig, integrale Baueinheit gefertigt, welche unter den zu erwartenden Lasten nicht zerstörungsfrei separierbar ist.

In der Mittelachse des Königszapfens 1 verläuft von dem oberen Ende 2 bis zum unteren Ende 4 eine Bohrung 6, in welche eine Welle 7 drehbar eingesetzt ist. Eine möglichst ruckelfreie Lagerung der Welle 7 wird durch ein oberes Wellenlager 26, das sich vom Montageteller 3 in Einbaulage nach unten erstreckt, und ein unteres Wellenlager 27, das sich vom Abschlussbund 5 in Einbaulage nach oben erstreckt, erreicht. Das obere und untere Wellenlager 26, 27 sind besonders gut in der vergrößerten Ansicht der Fig. 2 zu erkennen.

An dem unteren Ende 4 des Königszapfens 1 greift an einem unteren Wellenende 9 der Welle 7 drehfest ein Verbindungsstab 10 an, der in radialer Richtung beabstandet zu dem Königszapfen 1 eine Schwenkfahne 11 trägt. Bei eingekuppeltem Königszapfen 1 in eine Sattelkupplung (nicht gezeigt) befindet sich die Schwenkfahne 11 im Bereich einer V-förmigen Einfahröffnung der Sattelkupplung.

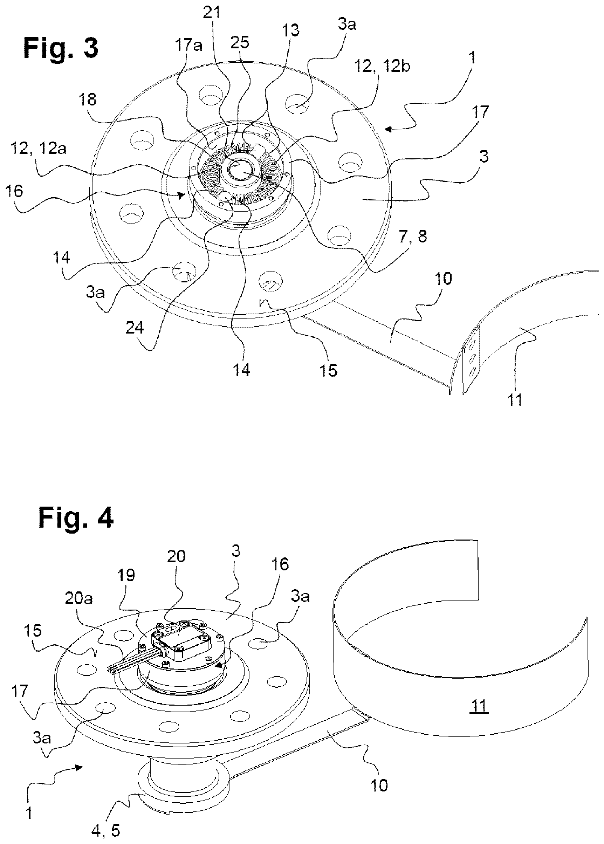

An einer Oberseite 15 des Königszapfens 1 ist mittels Federgehäusebefestigungsschrauben 28 ein dosenförmiges Federgehäuse 16 befestigt. Das Federgehäuse 16 weist eine vom Königszapfen 1 wegzeigende, umlaufende Umfangswand 17 (siehe Fig. 2, 3) auf, die in Einbaulage von oben mit einem Deckel 19 verschlossen ist. Auf der dem Deckel 19 gegenüberliegenden Seite der Umfangswand 17 geht diese in eine Bodenwand 22 über, mit welcher das Federgehäuse 16 auf dem Montageteller 3 aufliegt. Ein oberes Wellenende 8 der Welle 7 reicht durch eine in der Bodenwand 22 zentrisch eingebrachte Durchtrittsöffnung 23 bis in das Federgehäuse 16 hinein.

Aus Gründen einer einfachen Montierbarkeit ist die Welle 7 aus einem Wellenoberteil 7a und einem Wellenunterteil 7b zusammengesetzt, wobei das Wellenoberteil 7a von oben durch das Federgehäuse 16 und das Wellenunterteil 7b von unten durch den Abschlussbund 5 in die Bohrung 6 eingeschoben sind und sich darin gegenüberstehen. In dieser Einbauposition ist von oben ein Wellenverbindungselement 7c durch das Wellenoberteil 7a eingebracht, im vorliegenden Fall in Form einer Schraube, und mit dem Wellenunterteil 7b verbunden beziehungsweise in das Wellenunterteil 7b eingeschraubt.

Die Figur 3 zeigt einen am oberen Wellenende 8, an der Stirnseite des Wellenoberteils 7a befestigten Magnet 21, der zusammen mit der Welle 7 entweder im Uhrzeigersinn oder entgegen dem Uhrzeigersinn schwenkt. Diese Rotationsbewegung der Welle 7 wird von einem ortsfest im Deckel 19 angebrachten Winkelsensor 20 (siehe Fig. 2, 4) erfasst und dessen Messsignal über Anschlussleitungen 20a an eine nicht dargestellte Auswerte- und Steuerelektronik zum Ansteuern einer gelenkten Aufliegerachse weitergeleitet.

In der Fig. 3 ist ein zwischen oberem Wellenende 8 und Innenseite 17a der Umfangswand 17 ausgeformter Ringraum 18 zu erkennen. In den Ringraum 18 ragt ein Haltestift 24 hinein, der ortsfest gegenüber dem Königszapfen 1 befestigt ist. Im vorliegenden Ausführungsbeispiel ist der Haltestift 24 parallel zur axialen Erstreckung des Königszapfens 1 von oben in die Bodenwand 22 eingeschraubt.

In der Ausgangsstellung diametral dem Haltestift 24 gegenüberliegend, ragt ebenfalls in den Ringraum 18 ein Verdrängerstift 25 hinein. Der Verdrängerstift 25 ist radial zu der Welle 7 ausgerichtet und in das Wellenoberteil 7a eingeschraubt. Der Verdrängerstift 25 dreht grundsätzlich zusammen mit der Welle 7. Vorzugsweise unterteilt der Verdrängerstift 25 den Ringraum 18 in der Ausgangsstellung ausgehend von dem Haltestift 24 in zwei gleichgroße Hälften. Bei einer Schwenkbewegung der Schwenkfahne 11 vergrößert sich je nach Schwenkrichtung entweder der eine oder andere Abstand innerhalb des Ringraumes 18 von dem Haltestift 24 bis zu dem Verdrängerstift 25, wohingegen sich der andere Abstand um das gleiche Maß verkleinert.

In den Ringraum 18 ist ein Federelement 12 in Form von zwei Schraubenfedern 12a, 12b eingelegt, wobei die Schraubenfeder 12a in der Bildebene auf der linken Seite der Welle 7 und die Schraubenfeder 12b auf der rechten Seite der Welle 7 von dem Haltestift 24 zu dem Verdrängerstift 25 verläuft und an diesen anliegt. Beide Schraubenfedern 12a, 12b stoßen mit ihrem ersten Abschnitt 13 gegen den Verdrängerstift 25 und mit ihrem zweiten Abschnitt 14 gegen den Haltestift 24, jeweils von entgegengesetzten Seiten.

Bei einem Auswandern der Schwenkfahne 11 entgegen dem Uhrzeigersinn ist die Schraubenfeder 12a gestaucht und baut entsprechend ihrer Federkraft einen Gegendruck auf, welcher die Welle 7 und somit auch die Schwenkfahne 11 in die Ausgangsstellung zurückdrückt. Bei einem Auswandern der Schwenkfahne 11 im Uhrzeigersinn ist die Schraubenfeder 12b gestaucht und baut entsprechend ihrer Federkraft einen Gegendruck auf, welcher die Welle 7 und somit auch die Schwenkfahne 11 in die Ausgangsstellung zurückdrückt. Insofern ist bei einem Auswandern der Schwenkfahne 11 jeweils lediglich eine der beiden Schraubenfedern 12a, 12b belastet und sorgt für ein Zurückschwenken der Schwenkfahne 11 in die Ausgangsstellung, in welcher der Auflieger mit dem Zugfahrzeug mechanisch aneinander gekuppelt werden kann.

### Bezugszeichenliste

- 1: Königszapfen
- 2: oberes Ende Königszapfen
- 3: Montageteller
- 3a: Befestigungsöffnungen
- 4: unteres Ende Königszapfen
- 5: Abschlussbund
- 6: Bohrung
- 7: Welle
- 7a: Wellenoberteil
- 7b: Wellenunterteil
- 7c: Wellenverbindungselement
- 8: oberes Wellenende
- 9: unteres Wellenende
- 10: Verbindungsstab
- 11: Schwenkfahne
- 12: Federelement
- 12a,b: Schraubenfedern
- 13: erster Abschnitt Federelement/Schraubenfeder
- 14: zweiter Abschnitt Federelement/Schraubenfeder
- 15: Oberseite Königszapfen
- 16: Federgehäuse
- 17: Umfangswand Federgehäuse
- 17a: Innenseite Umfangswand
- 18: Ringraum
- 19: Deckel Federgehäuse
- 20: Winkelsensor
- 20a: Anschlussleitungen Winkelsensor
- 21: Magnet
- 22: Bodenwand Federgehäuse
- 23: Durchtrittsöffnung Bodenwand
- 24: Haltestift
- 25: Verdrängerstift
- 26: oberes Wellenlager
- 27: unteres Wellenlager
- 28: Federgehäusebefestigungsschrauben
- 29: durchmessergroßer Königszapfenabschnitt
- 30: durchmesserkleiner Königszapfenabschnitt

## Patentansprüche

1. Königszapfenvorrichtung für ein Aufliegerlenksystem, umfassend einen Königszapfen (1), an dessen oberem Ende (2) ein Montageteller (3) und an dessen unterem Ende (4) ein Abschlussbund (5) ausgebildet ist, wobei der Königszapfen (1) eine von dem Montageteller (3) bis zu dem Abschlussbund (5) verlaufende Bohrung (6) aufweist, in welcher eine Welle (7) angeordnet ist, deren oberes Wellenende (8) mindestens bis zu dem Montageteller (3) verläuft und deren unteres Wellenende (9) aus dem Abschlussbund (5) herausgeführt ist, wobei an dem unteren Wellenende (9) drehfest ein Verbindungsstab (10) angreift, welcher radial beabstandet zu dem Königszapfen (1) eine Schwenkfahne (11) trägt,
**dadurch gekennzeichnet,**
**dass** mindestens ein Federelement (12) vorgesehen ist, welches mit seinem ersten Abschnitt (13) an dem oberen Wellenende (8) angreift und die Schwenkfahne (11) in unbelastetem Zustand stets in eine vorgegebene Ausgangslage ausrichtet.

2. Königszapfenvorrichtung nach Anspruch 1, **dadurch gekennzeichnet, dass** das mindestens eine Federelement (12) mit seinem zweiten Abschnitt (14) bezüglich des Königszapfens (1) ortsfest abgestützt ist.

3. Königszapfenvorrichtung nach Anspruch 1 oder 2, **dadurch gekennzeichnet, dass** das obere Wellenende (8) nach oben aus dem Königszapfen (1) herausgeführt ist.

4. Königszapfenvorrichtung nach Anspruch 3, **dadurch gekennzeichnet, dass** das mindestens eine Federelement (12) in einem an einer Oberseite (15) des Königszapfens (1) befestigten Federgehäuse (16) angeordnet ist, in welches das obere Wellenende (8) hineinragt.

5. Königszapfenvorrichtung nach Anspruch 4, **dadurch gekennzeichnet, dass** das Federgehäuse (16) eine in radialer Richtung zu dem oberen Wellenende (8) beabstandete Umfangswand (17) aufweist, so dass zwischen dem oberen Wellenende (8) und der Umfangswand (17) ein Ringraum (18) ausgebildet ist.

6. Königszapfenvorrichtung nach Anspruch 4 oder 5, **dadurch gekennzeichnet, dass** das Federgehäuse (16) mittels eines auf der dem Königszapfen (1) abgewandten Seite angeordneten Deckels (19) verschlossen ist.

7. Königszapfenvorrichtung nach Anspruch 5 oder 6, **dadurch gekennzeichnet, dass** in die Umfangswand (17) oder in den Deckel (19) ein Winkelsensor (20) eingesetzt ist.

8. Königszapfenvorrichtung nach Anspruch 7, **dadurch gekennzeichnet, dass** der Winkelsensor (20) berührungslos einen am oberen Wellenende (8) befestigten Magneten (21) detektiert.

9. Königszapfenvorrichtung nach einem der Ansprüche 4 bis 8, **dadurch gekennzeichnet, dass** das Federgehäuse (16) eine Bodenwand (22) mit einer Durchtrittsöffnung (23) für das obere Wellenende (8) aufweist.

10. Königszapfenvorrichtung nach einem der Ansprüche 5 bis 9, **dadurch gekennzeichnet, dass** in den Ringraum (18) ein ortsfest zum Federgehäuse (16) angeordneter Haltestift (24) und ein an dem oberen Wellenende (8) angeordneter Verdrängerstift (25) ragen.

11. Königszapfenvorrichtung nach Anspruch 10, **dadurch gekennzeichnet, dass** der Haltestift (24) an einer Innenseite (17a) der Umfangswand (17) und/oder dem Deckel (19) und/oder der Bodenwand (22) des Federgehäuses (16) befestigt ist.

12. Königszapfenvorrichtung nach Anspruch 10 oder 11, **dadurch gekennzeichnet, dass** der Haltestift (24) und der Verdrängerstift (25) in der vorgegebenen Ausgangslage der Schwenkfahne (11) diametral gegenüberliegend in dem Ringraum (18) angeordnet sind.

13. Königszapfenvorrichtung nach einem der Ansprüche 1 bis 12, **dadurch gekennzeichnet, dass** das mindestens eine Federelement (16) aus zwei Schraubenfedern (12a, 12b) gebildet ist.

14. Königszapfenvorrichtung nach Anspruch 13, **dadurch gekennzeichnet, dass** bei einer Schwenkbewegung der Schwenkfahne (11) eine der beiden Schraubenfedern (12a, 12b) in Druckrichtung beansprucht ist.

15. Königszapfenvorrichtung nach Anspruch 13, wenn nach einem der Ansprüche 5 bis 12, oder 14, **dadurch gekennzeichnet, dass** die Schraubenfedern (12a, 12b) mit ihrer axialen Erstreckung in Umfangsrichtung des Ringraumes (18) eingelegt sind.

16. Königszapfenvorrichtung nach einem der Ansprüche 13 bis 15, **dadurch gekennzeichnet, dass** in der Ausgangslage der Schwenkfahne (11) die Schraubenfedern (12a, 12b) jeweils mit dem ersten Abschnitt (13) an dem Verdrängerstift (25) und mit dem zweiten Abschnitt (14) an dem Haltestift (24) unter Vorspannung anliegen.

## Claims

1. Kingpin device for a semitrailer steering system, comprising a kingpin (1) at the upper end (2) of which an assembly plate (3) is constructed and at the lower end (4) of which a termination collar (5) is constructed, wherein the kingpin (1) has a hole (6) which extends from the assembly plate (3) as far as the termination collar (5) and in which there is arranged a shaft (7) whose upper shaft end (8) extends at least as far as the assembly plate (3) and whose lower shaft end (9) extends out of the termination collar (5), wherein there engages at the lower shaft end (9) in a rotationally secure manner a connection rod (10) which in a state radially spaced apart from the kingpin (1) carries a pivot flag (11),
**characterised in that**
there is provided at least one resilient element (12) which engages with the first portion (13) thereof on the upper shaft end (8) and which always orientates the pivot flag (11) in the unloaded state into a predetermined starting position.

2. Kingpin device according to claim 1, **characterised in that** the at least one resilient element (12) is supported in a fixed manner with the second portion (14) thereof with respect to the kingpin (1).

3. Kingpin device according to claim 1 or 2, **characterised in that** the upper shaft end (8) is guided upwards out of the kingpin (1).

4. Kingpin device according to claim 3, **characterised in that** the at least one resilient element (12) is arranged in a resilient housing (16) which is secured to an upper side (15) of the kingpin (1) and into which the upper shaft end (8) protrudes.

5. Kingpin device according to claim 4, **characterised in that** the resilient housing (16) has a peripheral wall (17) which is spaced apart in a radial direction with respect to the upper shaft end (8) so that an annular space (18) is formed between the upper shaft end (8) and the peripheral wall (17).

6. Kingpin device according to claim 4 or 5, **characterised in that** the resilient housing (16) is closed by means of a cover (19) which is arranged at the side facing away from the kingpin (1).

7. Kingpin device according to claim 5 or 6, **characterised in that** an angle sensor (20) is inserted in the peripheral wall (17) or in the cover (19).

8. Kingpin device according to claim 7, **characterised in that** the angle sensor (20) detects in a contactless manner a magnet (21) which is secured to the upper shaft end (8).

9. Kingpin device according to any one of claims 4 to 8, **characterised in that** the resilient housing (16) has a base wall (22) having a through-opening (23) for the upper shaft end (8).

10. Kingpin device according to any one of claims 5 to 9, **characterised in that** a retention pin (24) which is arranged in a fixed manner with respect to the resilient housing (16) and a displacement pin (25) which is arranged on the upper shaft end (8) protrude into the annular space (18).

11. Kingpin device according to claim 10, **characterised in that** the retention pin (24) is secured to an inner side (17a) of the peripheral wall (17) and/or the cover (19) and/or the base wall (22) of the resilient housing (16).

12. Kingpin device according to claim 10 or 11, **characterised in that** the retention pin (24) and the displacement pin (25) in the predetermined starting position of the pivot flag (11) are arranged to be diametrically opposed in the annular space (18).

13. Kingpin device according to any one of claims 1 to 12, **characterised in that** the at least one resilient element (16) is formed by two helical springs (12a, 12b).

14. Kingpin device according to claim 13, **characterised in that** during a pivot movement of the pivot flag (11) one of the two helical springs (12a, 12b) is loaded in the pressure direction.

15. Kingpin device according to claim 13, when in accordance with any one of claims 5 to 12, or claim 14, **characterised in that** the helical springs (12a, 12b) are placed with the axial extent thereof in the peripheral direction of the annular space (18).

16. Kingpin device according to any one of claims 13 to 15, **characterised in that** in the starting position of the pivot flag (11) the helical springs (12a, 12b) are each in abutment with the first portion (13) against the displacement pin (25) and with the second portion (14) against the retention pin (24) with pretensioning.

## Revendications

1. Dispositif d'axe-pivot pour un système de guidage de remorque, comprenant un axe-pivot (1) à l'extrémité supérieure (2) duquel est conçue une plaque de montage (3) et à son extrémité inférieure (4) une nervure d'extrémité (5), dans lequel l'axe-pivot (1) présente un alésage (6) allant de la plaque de montage (3) jusqu'à la nervure d'extrémité (5), dans lequel est disposé un arbre (7), dont l'extrémité d'arbre supérieure (8) passe au moins jusqu'à la plaque de montage (3) et dont l'extrémité d'arbre inférieure (9) est sortie de la nervure d'extrémité (5), dans lequel sur l'extrémité d'arbre inférieure (9) engrène en rotation une tige de raccordement (10), laquelle porte une languette pivotante (11) espacée radialement de l'axe-pivot (1), **caractérisé en ce qu'**au moins un élément élastique (12) est prévu, lequel engrène avec sa première section (13) sur l'extrémité d'arbre supérieure (8) et oriente constamment la languette pivotante (11) dans l'état non chargé dans une position de départ prédéfinie.

2. Dispositif d'axe-pivot selon la revendication 1, **caractérisé en ce que** le au moins un élément élastique (12) est soutenu avec sa deuxième section (14) de façon fixe par rapport à l'axe-pivot (1).

3. Dispositif d'axe-pivot selon la revendication 1 ou 2, **caractérisé en ce que** l'extrémité d'arbre supérieure (8) est sortie vers le haut de l'axe-pivot (1).

4. Dispositif d'axe-pivot selon la revendication 3, **caractérisé en ce que** le au moins un élément élastique (12) est disposé dans un boîtier de ressort (16) fixé à un côté supérieur (15) de l'axe-pivot (1), dans lequel pénètre l'extrémité d'arbre supérieure (8).

5. Dispositif d'axe-pivot selon la revendication 4, **caractérisé en ce que** le boîtier de ressort (16) présente une paroi circonférentielle (17) espacée dans le sens radial par rapport à l'extrémité d'arbre supérieure (8), de sorte qu'entre l'extrémité d'arbre supérieure (8) et la paroi circonférentielle (17) est conçu un espace annulaire (18).

6. Dispositif d'axe-pivot selon la revendication 4 ou 5, **caractérisé en ce que** le boîtier de ressort (16) est verrouillé à l'aide d'un couvercle (19) disposé sur le côté opposé à l'axe-pivot (1).

7. Dispositif d'axe-pivot selon la revendication 5 ou 6, **caractérisé en ce que** dans la paroi circonférentielle (17) ou dans le couvercle (19) est mis en place un capteur angulaire (20).

8. Dispositif d'axe-pivot selon la revendication 7, **caractérisé en ce que** le capteur angulaire (20) détecte sans contact un aimant (21) fixé à l'extrémité d'arbre supérieure (8).

9. Dispositif d'axe-pivot selon l'une des revendications 4 à 8, **caractérisé en ce que** le boîtier de ressort (16) présente une paroi de fond (22) avec une ouverture de passage (23) pour l'extrémité d'arbre supérieure (8).

10. Dispositif d'axe-pivot selon l'une des revendications 5 à 9, **caractérisé en ce que** dépassent dans l'espace annulaire (18) une tige de maintien (24) disposée de façon fixe par rapport au boîtier de ressort (16) et une tige mobile (25) disposée à l'extrémité d'arbre supérieure (8).

11. Dispositif d'axe-pivot selon la revendication 10, **caractérisé en ce que** la tige de maintien (24) est fixée à un côté interne (17a) de la paroi circonférentielle (17) et / ou au couvercle (19) et / ou à la paroi de fond (22) du boîtier de ressort (16).

12. Dispositif d'axe-pivot selon la revendication 10 ou 11, **caractérisé en ce que** la tige de maintien (24) et la tige mobile (25) sont disposées dans la position de départ prédéfinie de la languette pivotante (11) de façon diamétralement opposée dans l'espace annulaire (18).

13. Dispositif d'axe-pivot selon l'une des revendications 1 à 12, **caractérisé en ce que** le au moins un élément à ressort (16) est formé de deux ressorts cylindriques (12a, 12b).

14. Dispositif d'axe-pivot selon la revendication 13, **caractérisé en ce que** lors d'un mouvement pivotant de la languette pivotante (11), l'un des deux ressorts cylindriques (12a, 12b) est sollicité dans le sens de pression.

15. Dispositif d'axe-pivot selon la revendication 13, selon l'une des revendications 5 à 12, ou 14, **caractérisé en ce que** les ressorts cylindriques (12a, 12b) sont insérés avec leur extension axiale dans le sens circonférentiel de l'espace annulaire (18).

16. Dispositif d'axe-pivot selon l'une des revendications 13 à 15, **caractérisé en ce que** dans la position de départ de la languette pivotante (11), les ressorts cylindriques (12a, 12b) s'appuient à chaque fois sous précontrainte avec la première section (13) sur la tige mobile (25) et avec la deuxième section (14) sur la tige de maintien (24).
